# EUROPÄISCHE PATENTSCHRIFT

(11) **EP 3 248 238 B1**
(45) Veröffentlichungstag und Bekanntmachung des Hinweises auf die Patenterteilung: **25.03.2020**
(21) Anmeldenummer: 15703902.5
(22) Anmeldetag: 23.01.2015
(51) Int. Cl.: H01M 10/42, H01M 10/44, H01M 10/48, H02J 7/00

(54) **BATTERIEPACK ZUR STROMVERSORGUNG EINES FELDGERÄTS**
BATTERY PACK FOR SUPPLYING POWER TO A FIELD DEVICE
BLOC-BATTERIE DESTINÉ À ALIMENTER EN COURANT UN APPAREIL DE TERRAIN

(43) Veröffentlichungstag der Anmeldung: 29.11.2017
(73) Patentinhaber: VEGA Grieshaber KG, 77709 Wolfach (DE)
(72) Erfinder: ALLGAIER, Volker, 77716 Haslach i. K. (DE); STAIGER, Holger, 78739 Hardt (DE); MÜLLER, Tobias, 78662 Bösingen (DE); FRANK, Patrick, 77652 Offenburg (DE)
(74) Vertreter: Maiwald Patent- und Rechtsanwaltsgesellschaft mbH
(86) Internationale Anmeldenummer: PCT/EP2015/051367
(87) Internationale Veröffentlichungsnummer: WO 2016/116167

(56) Entgegenhaltungen:
- WO-A1-99/52168
- WO-A1-2012/114749

## Beschreibung

### GEBIET DER ERFINDUNG

Die Erfindung betrifft ein Batteriepack zur Stromversorgung eines Feldgeräts sowie ein Feldgerät mit einem solchen Batteriepack.

### HINTERGRUND DER ERFINDUNG

Feldgeräte werden oft mit Strom von Energiespeichern versorgt, deren Leistung im Falle von Verbrauchsspitzen der Feldgeräte nicht ausreicht, das Feldgerät mit ausreichend Energie zu versorgen. Daher fügt man üblicherweise einen Kondensator oder einen entsprechenden Energiepuffer in die Schaltung ein, der mit Strom aus dem Energiespeicher versorgt wird und zur Ladungspufferung verwendet wird.

Um ausreichend Ladung auf dem Kondensator zu speichern, muss der Kondensator mit ausreichend Spannung versorgt werden. Dazu können Spannungsregler und Spannungswandler eingesetzt werden. Der Spannungsregler hält die Spannung des Kondensators auf einem konstant hohen Niveau, wobei der Spannungswandler die Ausgangsspannung der Batterien auf ein höheres Niveau wandelt.

WO 2012/114749 A1 beschreibt ein Elektrowerkzeug mit einer Batterie und zwei verschiedenen Betriebsmoden.

### ZUSAMMENFASSUNG DER ERFINDUNG

Es kann als Aufgabe der Erfindung betrachtet werden, den Stromverbrauch beim Betreiben von Feldgeräten zu verringern.

Diese Aufgabe wird gelöst durch den Gegenstand der unabhängigen Patentansprüche. Weiterbildungen der Erfindung ergeben sich aus den abhängigen Ansprüchen und aus der folgenden Beschreibung.

Gemäß einem Aspekt der Erfindung ist ein Batteriepack zur Stromversorgung eines Feldgeräts und zur Bereitstellung einer Ausgangsspannung an das Feldgerät angegeben. Das Batteriepack weist eine Stromquelle und einen Spannungswandler auf, der ausgeführt ist, eine erste Spannung auf eine zweite Spannung zu wandeln, wobei die erste Spannung an der Stromquelle anliegt. Weiterhin weist das Batteriepack einen Spannungsregler auf, der einen aktivierten Modus und einen abgeschalteten Modus aufweist. Außerdem weist das Batteriepack eine Steuereinrichtung auf, wobei die Steuereinrichtung ausgeführt ist, auf ein Signal des Feldgeräts den Spannungsregler in den aktivierten Modus zu überführen und wobei die Ausgangsspannung nach Überführen des Spannungsreglers in den aktivierten Modus die zweite Spannung ist und nach Überführen des Spannungsreglers in den abgeschalteten Modus die erste Spannung ist.

Steht beispielsweise eine verbrauchsintensive Aufgabe des Feldgeräts bevor, so übermittelt das Feldgerät diese Information rechtzeitig an die Steuereinrichtung. Unmittelbar bevor die verbrauchsintensive Aufgabe ausgeführt wird, erhält die Steuereinrichtung ein Signal, das bewirkt, dass die Steuereinrichtung den Spannungsregler in den aktivierten Modus überführt. "Unmittelbar bevor" heißt in diesem Zusammenhang beispielsweise wenige Millisekunden oder es beschreibt eine Zeit, die ausreichend bemessen ist, eventuelle Totzeiten im System und die Zeitkonstanten eventuell vorhandener Kondensatoren zur Ladungsspeicherung zu berücksichtigen.

Befindet sich der Spannungsregler im aktivierten Modus, ist er in der Lage, den Spannungswandler so anzusteuern, dass der Spannungswandler die "erste" Spannung, also die der Stromquelle, auf diejenige Spannung wandelt, die der Spannungsregler dem Spannungswandler vorschreibt. Dies ist dann die "zweite" Spannung.

Befindet sich der Spannungsregler aufgrund dieses Ereignisses im aktivierten Modus, wird das Feldgerät mit derjenigen Spannung versorgt, die der Spannungswandler ausgibt. D. h. diejenige Spannung, die der Spannungsregler dem Spannungswandler auszugeben vorschreibt.

Ist ein Kondensator zur Ladungsspeicherung in die Schaltung integriert, ist die am Kondensator anliegende Spannung die des Spannungswandlers. Überführt dagegen die Steuereinrichtung den Spannungsregler in den abgeschalteten Modus, wird das Feldgerät direkt mit der Spannung der Stromquelle versorgt und der Spannungswandler wird nicht verwendet.

Eine Verbrauchsspitze des Feldgeräts kann in diesem Zusammenhang durch einen Messdatenübertragungsvorgang oder durch einen Messvorgang ausgelöst werden.

Das Batteriepack umfasst neben einer oder mehrerer Batterien beispielsweise eine Platine, auf der die Steuereinrichtung implementiert ist. Das Batteriepack ist somit vom Feldgerät abgesetzt, d. h. es ist eine eigene Einheit und nicht in das Feldgerät integriert. Dies setzt voraus, dass sowohl am Batteriepack als auch am Feldgerät eine entsprechende Schnittstelle zur Kommunikation der beiden Geräte zur Verfügung steht.

Ein Aspekt der Erfindung ist somit die Stromversorgung des Feldgeräts mit wahlweise aktivem oder abgeschaltetem Spannungsregler.

Gemäß der Erfindung weist das beschriebene Batteriepack eine Spannungsmesseinrichtung auf, die ausgeführt ist, die Spannung an der Stromquelle zu messen. Die Spannung, die an der Stromquelle anliegt, kann beispielsweise durch konventionelle Messsysteme, die üblicherweise aus Transistoren gefertigt werden, gemessen werden.

Gemäß der Erfindung ist ferner eine Logikeinrichtung vorgesehen, die ausgeführt ist, die gemessene Spannung an der Stromquelle mit einer vordefinierten Grenzwertspannung zu vergleichen und das Vergleichsergebnis der Steuereinrichtung zu übergeben.

Ob die gemessene Spannung der Stromquelle über oder unter der vordefinierten Grenzwertspannung liegt, ist beispielsweise vom verwendeten Batterietyp abhängig. Werden beispielsweise Nickel-Cadmium Batterien verwendet, so mag die Spannung unter der vordefinierten Grenzwertspannung liegen, wohingegen bei der Verwendung von Lithium-Ionen Batterien die Spannung aufgrund der anderen Elektronegativität der verwendeten Elemente über der vordefinierten Grenzwertspannung liegen kann.

Gemäß der Erfindung ist die Steuereinrichtung weiterhin ausgeführt, bei Erfassen eines Unterschreitens des Grenzwerts durch die Logikeinrichtung den Spannungsregler in den aktivierten Modus zu überführen. Unterschreitet wie beschrieben die gemessene Spannung den vordefinierten Grenzwert, so gibt die Logikeinrichtung ein entsprechendes Ergebnis aus und teilt dieses Ergebnis der Steuereinrichtung mit. Die Steuereinrichtung überführt daraufhin den Spannungsregler in den aktivierten Modus, d. h. der Spannungsregler ist aktiv und regelt eine Spannung des Kondensators mit Hilfe des Spannungswandlers.

Gemäß einer weiteren Ausführungsform der Erfindung ist die Stromquelle eine Gleichstromquelle. Insbesondere kann es sich um eine mobile Gleichstromquelle handeln. Unter mobilen Gleichstromquellen wird im Rahmen der Erfindung ein tragbares Gerät verstanden, insbesondere eines ohne Verbindung zum konventionellen Stromnetz.

Gemäß einer weiteren Ausführungsform der Erfindung ist die Stromquelle eine Batterie und/oder ein Akkumulator.

Das Batteriepack weist außerdem einen Kondensator auf, der ausgeführt ist, seine gespeicherte Ladung dem Feldgerät bei erhöhtem Energieverbrauch zur Verfügung zu stellen. Der Kondensator ist weiterhin ausgeführt, durch die zweite Spannung aufgeladen zu werden.

Der Kondensator kann mit einer Ausgangsspannung beaufschlagt werden. Liegt an diesem Kondensator eine Spannung an, kann er je nach seiner Kapazität eine gewisse Menge an Ladung speichern, die dann als zusätzliche Energiemenge zur Verfügung gestellt werden kann. In diesem Sinne dient der Kondensator als kurzfristiger Energiespeicher, d. h. als Puffer für elektrische Ladung, die dann dem Feldgerät zugeführt werden kann, wenn das Feldgerät eine Verbrauchsspitze aufweist.

Wird ein Kondensator verwendet, so wird an ihm eine Spannung angelegt, die dem Kondensator vom Spannungswandler zur Verfügung gestellt wird. Der Spannungswandler wird dabei von dem Spannungsregler gesteuert, wobei der Spannungsregler eine Sollspannung als Ausgangsspannung des Spannungswandlers definiert. Je höher diese Ausgangsspannung des Spannungswandlers ist, d. h. je höher die Spannung ist, mit der der Kondensator beaufschlagt wird, umso mehr Ladung vermag der Kondensator zu speichern.

Beim Aufladen oder Entladen des Kondensators wird eine bestimmte Zeit für eine bestimmte Ladungsmenge benötigt. In linearer Sichtweise beschreibt die Kondensatorzeitkonstante diese Zeit, in der etwa zwei Drittel der möglichen Ladung aufgeladen oder entladen ist. Diese Zeitkonstante des Kondensators ist maßgebend für diejenige Zeitspanne, die benötigt wird zwischen dem Zeitpunkt, bei dem das Feldgerät der Steuereinrichtung mitteilt, dass eine energieintensive Aufgabe unmittelbar bevorsteht und demjenigen Zeitpunkt, an dem die energieintensive Aufgabe durch das Feldgerät ausgeführt werden soll.

Gemäß einer weiteren Ausführungsform der Erfindung ist eine Bypassleitung vorgesehen, die die elektrische Energie von der Stromquelle direkt zum Feldgerät führt. Befindet sich der Spannungsregler im abgeschalteten Modus, werden sowohl der Spannungswandler, der Spannungsregler als auch ein evtl. vorhandener Kondensator vollständig umgangen. D. h., dass eine direkte Leitung von der Stromquelle, beispielsweise einer Batterie, zum Feldgerät führt, ohne dass dabei die Spannung geregelt wird oder in einem Kondensator eine Ladung zwischengespeichert wird.

Gemäß einer weiteren Ausführungsform der Erfindung ist eine Schaltereinrichtung vorgesehen, die den Strom zur Feldgerätestromversorgung wahlweise über den Bypass zum Feldgerät oder in den Spannungswandler führt. In anderen Worten sorgt die Schaltereinrichtung dafür, dass entsprechend dem Modus des Spannungsreglers das Feldgerät direkt mit Strom versorgt wird oder der Spannungsregler zusammen mit dem Spannungswandler mit Strom versorgt wird, indem die entsprechende Leitung geschaltet wird.

Gemäß einem weiteren Aspekt der Erfindung ist ein Feldgerät angegeben, das ausgeführt ist, an ein oben und im Folgenden beschriebenes Batteriepack angeschlossen zu werden.

Gemäß einer weiteren Ausführungsform der Erfindung weist das Feldgerät einen Controller auf, der ausgeführt ist, ein Steuersignal an die Steuereinrichtung auszugeben. Bei einem Steuersignal handelt es sich beispielsweise um einen Befehl, den Spannungsregler zu aktivieren.

Das Feldgerät und die Stromversorgung bilden in diesem Sinne zwei separate Einheiten. Das Feldgerät beinhaltet einen Controller, der anstehende energieintensive Aufgaben überwacht. Steht eine energieintensive Aufgabe des Feldgeräts unmittelbar bevor, so sendet der Controller an die Steuereinrichtung der Stromversorgung ein entsprechendes Signal, so dass die Stromversorgung früh genug reagieren kann und eine entsprechende Strommenge dem Feldgerät zur Verfügung stellen kann.

In Versuchen konnte durch den abschaltbaren bzw. durch den Bypass umgehbaren Pfad aus Spannungswandler, Spannungsregler und Kondensator bei einer Stromversorgung aus sechs Volt (vier 1,5 V Batterien) bei abgeschaltetem/umgangenem Pfad durch den Bypass ein Stromverbrauch von 34 µA (Mikroampere), verglichen mit 616 µA in dem gleichen System aber ohne abschaltbarem Pfad des Spannungsreglers, gemessen werden. Bei einer Stromversorgung mit 4,8 Volt (vier 1,2 V Akkumulatoren) ergaben sich ein Stromverbrauch von 30 µA im Zustand des abgeschalteten Pfads des Spannungsreglers und 744 µA für das gleiche System aber ohne den abschaltbaren Pfad des Spannungsreglers.

Im Folgenden werden mit Verweis auf die Figuren Ausführungsbeispiele der Erfindung beschrieben.

### KURZE BESCHREIBUNG DER FIGUREN

Fig. 1 zeigt eine schematische Darstellung eines Batteriepacks und eines Feldgeräts gemäß einem Ausführungsbeispiel der Erfindung.
Fig. 2 zeigt eine schematische Darstellung eines Batteriepacks und eines Feldgeräts gemäß einem weiteren Ausführungsbeispiel der Erfindung, eingebaut in einen Behälter.

### DETAILLIERTE BESCHREIBUNG VON AUSFÜHRUNGSBEISPIELEN

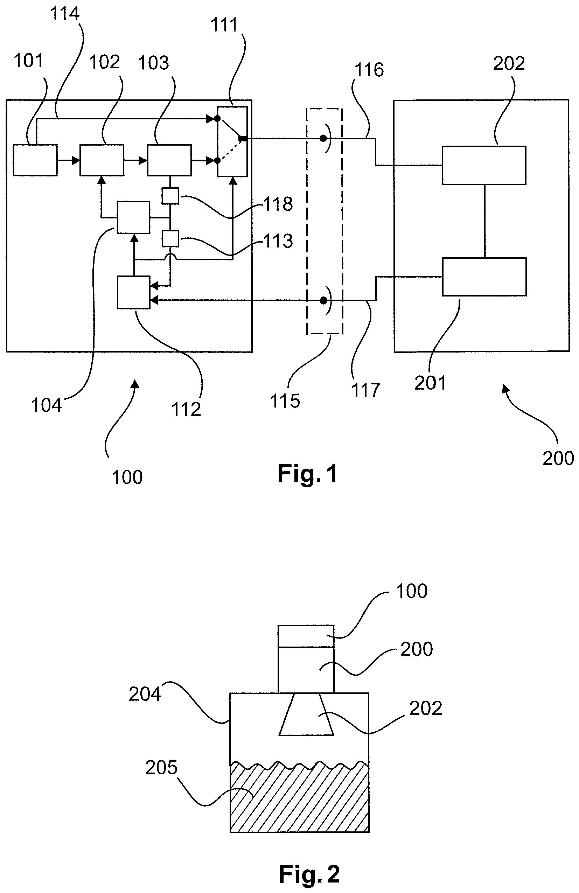

Fig. 1 zeigt ein Batteriepack 100 und ein Feldgerät 200 gemäß einem Ausführungsbeispiel der Erfindung. Das Batteriepack umfasst eine Stromquelle 101, beispielsweise eine Batterie, einen Spannungswandler 102, einen Spannungsregler 104, eine Steuereinrichtung 112, eine Spannungsmesseinrichtung 118, eine Logikeinrichtung 113, eine Schalteinrichtung 111 sowie einen Kondensator 103. Das Feldgerät 200 umfasst einen Stromverbraucher 202, insbesondere einen Sensor oder einen Sender sowie einen Controller 201, auch Steuereinheit genannt.

Verbunden sind diese beiden Einheiten 100, 200 durch eine Schnittstelle 115 zum Anstecken einer Leitung oder Leitungsanordnung 116 zur Übertragung von Versorgungsstrom sowie einer Leitung oder Leitungsanordnung 117, die vom Controller 201 an die Steuereinrichtung des Batteriepacks 100 Steuersignale sendet. Auch kann vorgesehen sein, dass Energie und Steuersignale über dieselbe Leitungsanordnung übertragen werden.

Eine mögliche Funktionsweise des Systems aus Batteriepack 100 und Feldgerät 200 gestaltet sich beispielsweise wie folgt: Es sei angenommen, dass sich das System zunächst im Schlafmodus befindet, d. h. dass gerade keine energieintensive Aufgabe vom Feldgerät 200 ausgeführt wird oder unmittelbar bevorsteht. Erhält das Feldgerät 200 von einem externen Gerät beispielsweise das Kommando zum Ausführen einer energieintensiven Aufgabe, so wird dies vom Controller 201 des Feldgeräts 200 wahrgenommen und er sendet an die Steuereinrichtung 112 des Batteriepacks 100 ein entsprechendes Signal. Die Steuereinrichtung 112 überprüft nun das Ergebnis der Logikeinrichtung 113. Die Logikeinrichtung 113 überprüft dann die Spannung des Kondensators 103 mit einer Grenzwertspannung. Die Spannung wird dabei von der Spannungsmesseinrichtung 118 gemessen.

Im folgenden Beispiel sei angenommen, die Spannung des Kondensators 103 liege unterhalb der vordefinierten Grenzwertspannung. Diese Aussage sendet das Logikglied 113 an die Steuereinrichtung 112. Die Steuereinrichtung 112 erhält damit die Information, dass eine energieintensive Aufgabe des Feldgeräts 200 unmittelbar bevorsteht und dass die Spannung des Kondensators 103 unter dem vordefinierten Spannungsgrenzwert liegt.

Beispielsweise liegt in der Steuereinrichtung 112 eine logische 'UND' Verknüpfung dieser beiden Abfragen vor. Nur wenn unmittelbar eine energieintensive Aufgabe vom Controller 201 gemeldet wird und die Spannung des Kondensators 103 unter den Grenzwert fällt, überführt die Steuereinrichtung 112 den Spannungsregler 104 in seinen aktiven Modus und gleichzeitig bewirkt die Schalteinrichtung 111, dass die Stromzufuhr - anstatt der direkten Verbindung über den Bypass 114 - von der Batterie 101 und dem Kondensator 103 aus dem Verbraucher 202 zugeführt wird. Der Regler 104 befindet sich nun in seinem aktivierten Modus und gibt dem Spannungswandler 102 eine Spannung vor, die der Kondensator 103 aufweisen soll. Enthält der Kondensator 103 ausreichend Ladung, die vom Regler 104 vorgegeben wurde (die Sollspannung liegt also längere Zeit an), kann die Ladung des Kondensators 103 an den Verbraucher 202 des Feldgeräts 200 abgegeben werden, so dass die energieintensive Aufgabe ausgeführt werden kann.

Fig. 2 zeigt ein konkretes Beispiel für ein Füllstandsmessgerät 200 (z.B. Füllstandsradar), mit aufgesetztem Batteriepack 100, eingebaut in einen Tank. Der Verbraucher 202 ist diesem Fall ein Elektronikmodul, welches an die Radarantenne zum Senden und Empfangen von Radarwellen, die an der Oberfläche des Füllguts 205 und an der Behälterwand 204 des Füllguts reflektiert werden, angeschlossen ist.

Das Batteriepack 100 versorgt das Füllstandsmessgerät 200 durchgehend mit Strom. Übermittelt das Füllstandsmessgerät 200 dem Batteriepack 100, dass eine Messung unmittelbar bevorsteht, entscheidet das Batteriepack 100, ob dazu der Spannungsregler 104 aktiv sein muss, sprich die benötigte Energie derart hoch ist, dass das Batteriepack 100 einen Kondensator 103 mittels eines Spannungswandlers 102 aufzuladen hat, um dann die auf dem Kondensator 103 gesammelte Ladung als Energiequelle zu verwenden, oder ob die Energieversorgung des Füllstandsmessgeräts 200 ohne Kondensator 103 und damit ohne die Verwendung des Spannungsreglers 104 und ohne den Spannungswandler 102 erfolgen kann. Im letzteren Fall reicht die Energie der Stromquelle 101 des Batteriepacks 100 direkt aus, den Messvorgang mit der Radarantenne des Füllstandsmessgeräts 200 durchzuführen und es erfolgt keine Aktivierung des Spannungsreglers.

Ergänzend ist darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen zu sehen.

### BEZUGSZEICHENLISTE

- 100: Batteriepack
- 101: Stromquelle
- 102: Spannungswandler
- 103: Kondensator
- 104: Spannungsregler
- 111: Schalteinrichtung
- 112: Steuereinrichtung
- 113: Logikeinrichtung
- 114: Bypass
- 115: Schnittstelle
- 116: Leitung
- 117: Leitung
- 118: Spannungsmesseinrichtung
- 200: Feldgerät
- 201: Controller
- 202: Verbraucher
- 204: Behälterwand
- 205: Füllgut

## Patentansprüche

1. Batteriepack (100) zur Stromversorgung eines Feldgeräts (200) und zur Bereitstellung einer Ausgangsspannung an das Feldgerät (200), aufweisend:
eine Stromquelle (101);
einen Kondensator (103);
eine Spannungsmesseinrichtung (118), die ausgeführt ist, die Spannung an der Stromquelle (101) zu messen;
eine Logikeinrichtung (113);
einen Spannungswandler (102), der ausgeführt ist, eine erste Spannung auf eine zweite Spannung zu wandeln;
wobei die erste Spannung an der Stromquelle (101) anliegt;
weiterhin aufweisend:
einen Spannungsregler (104), der einen aktivierten Modus und einen abgeschalteten Modus aufweist;
eine Steuereinrichtung (112), wobei die Steuereinrichtung (112) ausgeführt ist, auf ein Signal des Feldgeräts (200) den Spannungsregler (104) in den aktivierten Modus zu überführen; und
wobei die Ausgangsspannung nach Überführen des Spannungsreglers (104) in den aktivierten Modus die zweite Spannung ist und nach Überführen des Spannungsreglers (104) in den abgeschalteten Modus die erste Spannung ist;
wobei die Logikeinrichtung (113) ausgeführt ist, die gemessene Spannung an der Stromquelle (101) mit einer vordefinierten Grenzwertspannung zu vergleichen und das Vergleichsergebnis der Steuereinrichtung (112) zu übergeben;
wobei die Steuereinrichtung (112) weiterhin ausgeführt ist, nur bei Feststellen eines Unterschreitens des Grenzwertes durch die Logikeinrichtung (113) und einer Meldung von einem Controller (201) des Feldgeräts (200), dass unmittelbar die Ausführung einer energieintensiven Aufgabe durch das Feldgerät bevorsteht, den Spannungsregler (104) in den aktivierten Modus zu überführen;
wobei der Kondensator (103) ausgeführt ist, seine gespeicherte Ladung dem Feldgerät (200) bei erhöhtem Energieverbrauch zur Verfügung zu stellen, wobei der Kondensator (103) weiterhin ausgeführt ist, durch die zweite Spannung aufgeladen zu werden.

2. Batteriepack (100) nach Anspruch 1, wobei die Stromquelle (101) eine Gleichstromquelle ist.

3. Batteriepack (100) nach einem der vorhergehenden Ansprüche, wobei die Stromquelle (101) eine Batterie und/oder ein Akkumulator ist.

4. Batteriepack (100) nach einem der vorhergehenden Ansprüche, weiterhin aufweisend:
einen Bypass (114), der die elektrische Energie von der Stromquelle (101) direkt zum Feldgerät (200) führt.

5. Batteriepack (100) nach Anspruch 4, weiterhin aufweisend:
eine Schaltereinrichtung (111), die den Strom zur Feldgerätstromversorgung wahlweise über den Bypass (114) zum Feldgerät (200) oder in den Spannungswandler (102) führt.

6. Feldgerät (200), mit einem Batteriepack (100) nach einem der vorhergehenden Ansprüche.

7. Feldgerät (200) nach Anspruch 6, aufweisend:
einen Controller (201), der ausgeführt ist, ein Steuersignal an die Steuereinrichtung (112) auszugeben.

## Claims

1. Battery pack (100) for supplying power to a field device (200) and for providing an output voltage to the field device (200), comprising
a power source (101);
a capacitor (103);
a voltage measuring device (118) adapted to measure the voltage at the power source (101);
logic means (113);
a voltage converter (102) adapted to convert a first voltage to a second voltage;
wherein the first voltage is applied to the current source (101);
further comprising:
a voltage regulator (104) having an enabled mode and a disabled mode;
control means (112), wherein the control means (112) is adapted to convert the voltage regulator (104) to the enabled mode upon a signal from the field device (200); and
wherein the output voltage is the second voltage after putting the voltage regulator (104) into the enabled mode and is the first voltage after putting the voltage regulator (104) into the disabled mode;
wherein the logic means (113) is adapted to compare the measured voltage at the current source (101) with a predefined limit voltage and to transfer the comparison result to the control means (112);
wherein the control means (112) is further adapted to transfer the voltage regulator (104) to the enabled mode only if the logic means (113) determines that the voltage falls below the limit value and a message from a controller (201) of the field device (200) that the execution of an energy-intensive task by the field device is imminent;
wherein the capacitor (103) is adapted to make its stored charge available to the field device (200) at increased power consumption, the capacitor (103) being further adapted to be charged by the second voltage.

2. Battery pack (100) according to claim 1, wherein the power source (101) is a direct current source.

3. Battery pack (100) according to any of the preceding claims, wherein the power source (101) is a battery and/or an accumulator

4. Battery pack (100) according to any one of the preceding claims, further comprising:
a bypass (114) which conducts the electrical energy from the power source (101) directly to the field device (200).

5. Battery pack (100) according to claim 4, further comprising:
switch means (111) which selectively routes the current to the field device power supply via the bypass (114) to the field device (200) or into the voltage converter (102).

6. Field device (200), comprising a battery pack (100) according to any one of the preceding claims.

7. Field device (200) according to claim 6, comprising:
a controller (201) adapted to output a control signal to the control means (112).

## Revendications

1. Bloc-batterie (100) destiné à l'alimentation en courant d'un appareil de terrain (200) et à fournir une tension de sortie à l'appareil de terrain (200), comportant :
une source de courant (101) ;
un condensateur (103) ;
un dispositif de mesure de tension (118), lequel est réalisé pour mesurer la tension à la source de courant (101) ;
un dispositif logique (113) ;
un transformateur de tension (102), lequel est réalisé pour transformer une première tension en une deuxième tension ;
dans lequel la première tension est présente à la source de courant (101) ;
comportant en outre :
un régulateur de tension (104), lequel comporte un mode activé et un mode éteint ;
un dispositif de commande (112), dans lequel le dispositif de commande (112) est réalisé pour passer le régulateur de tension (104) en mode activé sur un signal de l'appareil de terrain (200) ; et
dans lequel la tension de sortie est la deuxième tension après passage du régulateur de tension (104) en mode activé et est la première tension après passage du régulateur de tension (104) en mode éteint ;
dans lequel le dispositif logique (113) est réalisé pour comparer la tension mesurée à la source de courant (101) à une valeur limite de tension prédéfinie et pour transmettre le résultat de la comparaison au dispositif de commande (112) ;
dans lequel le dispositif de commande (112) est en outre réalisé pour passer le régulateur de tension (104) dans le mode activé seulement lorsqu'un sous-dépassement de la valeur limite est établi par l'unité logique (113) et qu'un contrôleur (201) de l'appareil de terrain (200) notifie que l'exécution par l'appareil de terrain (200) d'une tâche à forte intensité énergétique est imminente ;
dans lequel le condensateur (103) est réalisé pour tenir sa charge emmagasinée à disposition de l'appareil de terrain (200) en cas de consommation accrue d'énergie, dans lequel le condensateur (103) est en outre réalisé pour être chargé par la deuxième tension.

2. Bloc-batterie (100) selon la revendication 1, dans lequel la source de courant est une source de courant continu.

3. Bloc-batterie (100) selon l'une des revendications précédentes, dans lequel la source de courant (101) est une batterie et/ou un accumulateur.

4. Bloc-batterie (100) selon l'une des revendications précédentes, comportant en outre :
un pontage (114), lequel conduit l'énergie électrique directement de la source de courant (101) à l'appareil de terrain (200).

5. Bloc-batterie (100) la revendication 4, comportant en outre :
un dispositif commutateur (111), lequel conduit le courant destiné à l'alimentation de l'appareil de terrain au choix ou par le biais du pontage (114) vers l'appareil de terrain (200) ou dans le transformateur de tension (102).

6. Appareil de terrain (200) doté d'un bloc-batterie (100) selon l'une des revendications précédentes.

7. Appareil de terrain (200) selon la revendication 6, comportant :
un contrôleur (201), lequel est réalisé pour émettre un signal de commande vers le dispositif de commande (112).
